# EUROPEAN PATENT SPECIFICATION

(11) **EP 0 843 604 B1**
(45) Date of publication and mention of the grant of the patent: **18.10.2000**
(21) Application number: 96926031.4
(22) Date of filing: 12.07.1996
(51) Int. Cl.: B21C 23/14, B60N 2/06

(54) **METHOD OF MANUFACTURING SEAT RAILS**
VERFAHREN ZUR HERSTELLUNG VON SITZSCHIENEN
PROCEDE DE FABRICATION DE GLISSIERES DE SIEGES

(30) Priority: 14.07.1995 NO 952809
(43) Date of publication of application: 27.05.1998
(73) Proprietor: NORSK HYDRO A/S, 0240 Oslo 2 (NO)
(72) Inventor: CLAUSEN, Edvin, List, DK-6270 Tonder (DK)
(74) Representative: Patentanwälte Leinweber & Zimmermann
(86) International application number: NO9600178
(87) International publication number: WO9703770

(56) References cited:
- DE-C- 4 401 748
- GB-A- 1 061 680
- GB-A- 2 180 030

## Description

The present invention relates to seat rails in a motor vehicle, and more particularly to a method of manufacturing optimised seat rails.

Customarily a seat slide assembly in a vehicle comprises a first elongated (bottom) rail fastened to the vehicle floor and a second elongated (top) rail mounted on the first rail in a sliding and locking manner. The second rail is also applied for fastening of seats and safety belts for occupants of the vehicle.

Due to a general tendency to reduce the vehicle weight rails extruded in light metals, e.g. made of Al-alloys, have recently replaced rails made of steel. A drawback of the applied extrusion manufacturing technique is that the provided rails exhibit uniform cross-sections along their longitudinal extension (see for example GB-A-1 061 680). Since the load imposed on the rails varies significantly along their longitudinal extension, the rear part of the second (top) rail accommodating fastening means (apertures) for the safety belts exhibits larger dimension than the remaining front part of the rail. Currently applied solutions to achieve the above configuration of the seat rails are either to provide a whole rail with sufficient wall thickness and thus accidentally increase the weight or to remove the superfluous material from the front part, something which necessitates an additional cutting operation and material spill.

Another viable way to go is to reinforce the rear part of the rail by attachment of external members, thus increasing the complexity and number of components in the rail assembly.

Consequently, it is an object of the present invention to provide a novel manufacturing method/principle resulting in an optimised design of seat rails characterized by a unitary, light weight rail manufactured with minimum material spill.

This and other objects of the present invention are achieved by provision of a manufacturing method as claimed in the accompanying claim 1.

The invention will be described in details with reference to the attached drawings, Figs. 1-3, where
- Figs. 1a,b,c,d: show in a vertical cross-sectional view a different configuration of an intermediate extruded shape usable for manufacturing of rails according to the invention,
- Fig. 2: illustrates schematically the cutting step resulting in provision of two identical rails, and
- Fig. 3: shows in a partial perspective view the seat rail applied as the top rail in a seat rail assembly.

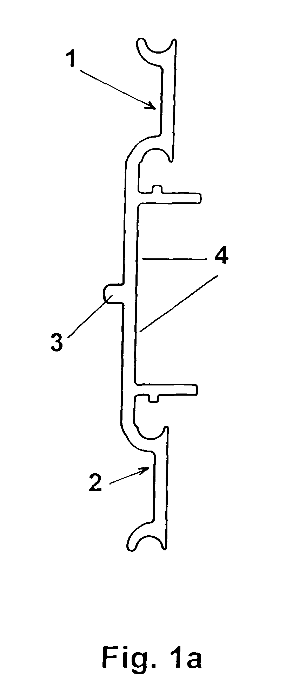

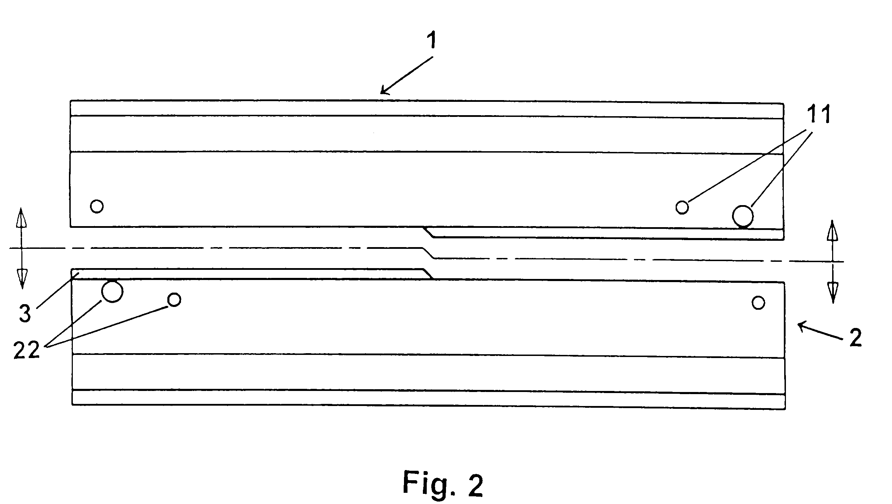

Referring to Fig. 1a two co-extruded rails (1,2) of identical cross-sectional configuration covering the requested sliding and fastening functions are interconnected along a reinforcing rib 3 laterally protruding from the side of the vertical rail wall 4. This unitary shape extruded in Al-alloy in one simple operation provides an intermediate product for the following single cutting operation as illustrated in Fig. 2 by the resulting separated rails 1,2. By alternately moving the cutting tool (not shown in the Figure) back and forth (up and down), thus following the upper side and the bottom side of the reinforcing rib 3, two identical rails ready to use are provided in one single cutting operation. Fastening apertures 11,22, respectively will then be provided in a conventional manner in the vertical side walls in the vicinity of the provided reinforcing rib 3.

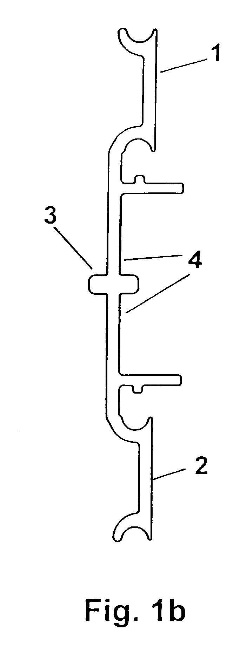

Fig. 1b shows an alternative cross-sectional configuration of the intermediate extruded shape comprising two co-extruded rails 1,2 where the reinforcing rib 3 protrudes laterally from both sides of the vertical rail wall 4.

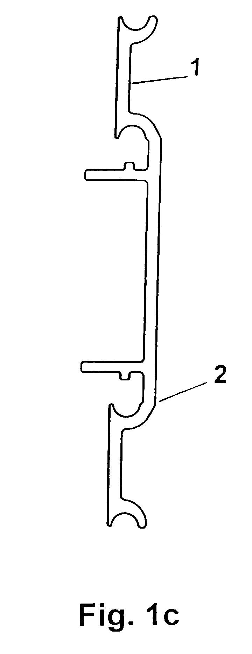

Another variant of the intermediate extruded shape illustrated in Fig. 1c exhibits no reinforcing rib between the co-extruded rails 1,2.

This particular embodiment will, after applying the above cutting pattern described in connection with Fig. 2, also result in two identical rails exhibiting different heights along their longitudinal extension and where the "elevated" part of the rails represent a local reinforcement of the rail in the area of fastening apertures (not shown in the Figure).

There is also a possibility to conduct "an asymmetric" longitudinal cut so that two rails having different longitudinal extension of the elevated part can be provided in one operation without spill of the material.

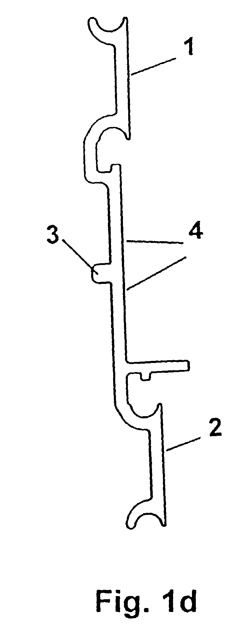

Still another configuration of the extruded intermediate shape is shown in Fig. 1d. Two rails of non-identical cross-sectional configuration 1,2 are co-extruded comprising in common a reinforcing rib 3 laterally protruding from the vertical rail wall 4.

An apparent advantage of this alternative configuration is the possibility to provide two different rails in a simple step cutting operation by the alternating movement of the cutting tool along the upper and the bottom side of the reinforcing rib 3.

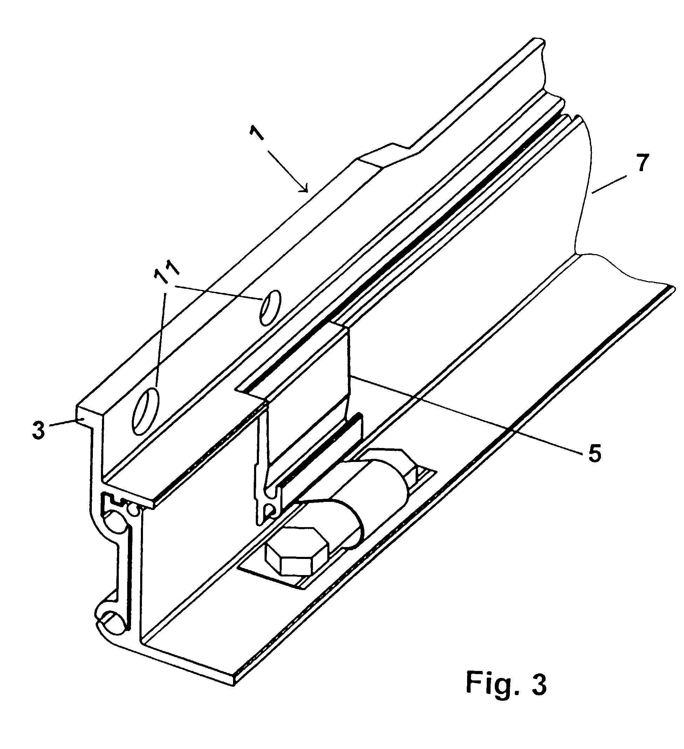

Fig. 3 illustrates in a perspective view the special design of the resulting rail applied as a top rail 1 comprising a higher part provided with the laterally extending top rib 3 representing the reinforced part of the rail exhibiting fastening apertures 11 for safety belts.

A perpendicularly movable locking means 5 ensures in a conventional manner attachment of the top rail 1 to the bottom rail 7.

The new method of manufacturing seat rails as illustrated above by way of examples of cutting different embodiments of the intermediate extruded shapes according to the present inventive principle results in a reduced number of processing/manufacturing steps, less use of material and consequently in substantial costs savings.

## Claims

1. Method of manufacturing seat rails, particularly for a motor vehicle, the method comprising steps of co-extruding at least two symmetrically arranged rails, and a separation of the rails from each other by running cutting means longitudinally, alternately above and under their mutual axis of symmetry, thereby providing individual rails (1,2) exhibiting different heights along their longitudinal extension.

2. Method according to claim 1,
**characterized in** that
the co-extruded rails are interconnected by a reinforcing rib (3) laterally protruding from at least one side of a vertical side rail wall (4), and where the separation is conducted by a longitudinal cut running alternately along each side of the reinforcing rib (3).

3. Method according to claim 1 or 2,
**characterized in** that
the co-extruded rails are extruded as rails of identical cross-sectional configuration.

4. Method according to claim 1 or 2,
**characterized in** that
the co-extruded rails are extruded as rails of different cross-sectional configuration.

## Patentansprüche

1. Verfahren zur Herstellung von Sitzschienen, insbesondere für ein Kraftfahrzeug, welches Verfahren die Schritte des Co-Extrudierens von mindestens zwei symmetrisch angeordneten Schienen und des Trennens der Schienen voneinander durch das Entlanglaufen einer Schneideinrichtung in Längsrichtung, abwechselnd über und unter ihrer gemeinsamen Symmetrieachse, umfaßt, so daß dadurch einzelne Schienen (1, 2) geschaffen werden, die unterschiedliche Höhen entlang ihrer Längsausdehnung aufweisen.

2. Verfahren nach Anspruch 1,
dadurch gekennzeichnet, daß die co-extrudierten Schienen durch eine Verstärkungsrippe (3) miteinander verbunden sind, die von mindestens einer Seite einer vertikalen Schienenseitenwand (4) vorragt, wobei das Trennen durch einen Längsschnitt erfolgt, der abwechselnd entlang beiden Seiten der Verstärkungsrippe (3) verläuft.

3. Verfahren nach Anspruch 1 oder 2,
dadurch gekennzeichnet, daß die co-extrudierten Schienen als Schienen mit identischer Querschnittskonfiguration extrudiert werden.

4. Verfahren nach Anspruch 1 oder 2,
dadurch gekennzeichnet, daß die co-extrudierten Schienen als Schienen mit unterschiedlicher Querschnittskonfiguration extrudiert werden.

## Revendications

1. Procédé de fabrication de glissières de siège, en particulier de glissières de siège pour véhicule à moteur, le procédé comprenant les opérations consistant à extruder d'un seul tenant au moins deux glissières disposées symétriquement et à séparer les glissières l'une de l'autre en déplaçant longitudinalement des moyens de coupe alternativement au-dessus et au-dessous de leur axe de symétrie mutuel, en fournissant de ce fait des glissières individuelles (1, 2) présentant différentes hauteurs sur leur étendue longitudinale.

2. Procédé selon la revendication 1,
caractérisé en ce que
les glissières extrudées d'un seul tenant sont reliées entre elles par une nervure de renfort (3) qui fait saillie latéralement à partir d'au moins un côté d'une paroi latérale verticale (4) de glissière, la séparation étant opérée grâce à une coupe longitudinale qui s'étend alternativement le long de chaque côté de la nervure de renfort (3) .

3. Procédé selon la revendication 1 ou 2,
caractérisé en ce que
les glissières extrudées d'un seul tenant sont extrudées sous forme de glissières présentant une configuration de section transversale identique.

4. Procédé selon la revendication 1 ou 2,
caractérisé en ce que
les glissières extrudées d'un seul tenant sont extrudées sous forme de glissières présentant une configuration de section transversale différente.
